# EUROPEAN PATENT APPLICATION

(11) **EP 2 328 123 A1**
(43) Date of publication of application: **01.06.2011**
(21) Application number: 11154343.5
(22) Date of filing: 25.04.2001
(51) Int. Cl.: G06Q 30/00

(54) **System and method for using a stored value instrument in electronic transactions and for storage and retrieval of information subject to authorization by a data controller**

(30) Priority: 27.04.2000 US 559778; 28.04.2000 US 200623 P; 17.05.2000 US 572795
(62) Divisional of application: 01928835.6
(71) Applicant: PayPal, Inc., San Jose CA 95131 (US); PayPal International Limited, Dublin 15 (IE)
(72) Inventor: Light, Elliot D., Rockville, MD 20850 (US); Ersheid, Ali, Pacific Grove, CA 93950 (US)
(74) Representative: Vossius & Partner

(57) **Abstract**

The computer-implemented method for purchasing an item or service over a network uses a stored value instrument at a server associated with a data repository. The method comprises the steps of: receiving at said server a purchase offer generated by a data recipient, including a data subject identifier, a data recipient identifier and a price, from a data subject; determining at said server at least one stored value instrument accepted by the data recipient; in response to receiving the purchase offer from the data subject, sending a list of stored value instruments accepted by the data recipient to the data subject, such that the list of stored value instruments is not sent until the purchase offer is received from the data subject; receiving at said server a selection of at least one stored value instrument, from the list of stored value instruments accepted by the data recipient, from the data subject; and sending information regarding the purchase of the item or service to the data recipient.

## Description

### INTRODUCTION

This invention relates generally to a method and system where certain information pertaining to a data subject is stored on a server and is provided to a third party at the request of the data subject. More particularly, the present invention relates to a method and system where tokens, gift certificates, or other representations of stored value (each a "stored value instrument" or "SVI") are stored on a server and are provided to a data recipient by a purchaser during a purchase or other transaction involving the exchange of value thereby allowing the data subject to use an electronic payment system to acquire a product or service over a network in an easy and safe manner.

The present invention also relates particularly to a method and system where certain data subject information is stored on a server and is associated with a third party controller. The information may be provided to the controller, or to a party authorized by the controller (an "authorized data recipient"), thereby allowing the data subject to deliver information related to the data subject over a network in an easy and safe manner.

### BACKGROUND OF THE INVENTION

With the emergence of the Internet, buyers and sellers are using the Internet to engage in electronic commerce. Merchants are vying for buyers in an increasingly competitive market. Attracting buyers to a seller's site is often an expensive proposition requiring off-net advertising or paying for banner space at a well known portal site. Other methods, such as purchasing marketing data and spamming buyers with emails, are only marginally effective.

In the "brick and mortar" world, sellers attract buyer interest by offering coupons or selling gifts certificates that may be applied against a purchase at the seller's site. Further, buyers are offered various ways to generally acquire incentives, such as those offered by airlines. In the virtual world of the Internet, coupon and gift certificate management is not easy task. First, a system must be devised to credit the value to the coupon to the holder of the coupon. If the coupon is personal to a particular buyer, the system must also authenticate the user. If a manufacturer issues a coupon, the system must be able to relate the coupon to a product of the manufacturer purchased by the buyer and transfer value to the seller accepting the coupon. Further, the system must be able to determine that a coupon has been used. If the coupon can be used incrementally, the system must be able to keep track of the remaining value of the coupon. Because a buyer may have multiple coupons issued by the same seller, the system should be able to combine the remaining value of multiple coupons to purchase an item that costs more than the value remaining on any one coupon. If a coupon expires, the system must be able to determine the expiration data and retire the coupon. Further, because electronic coupons can be copied the system must be able to detect counterfeit coupons.

Sellers on the Internet have also been vexed by the lack of a simple approach to completing small denomination purchases. A number of systems have been devised that permit a buyer to establish an account with a trusted third party (a "TTP") and to load into that account and spend those funds at any seller that also has an account with the same TTP. The relationship between the buyer and the seller in such systems is largely "arms length" in that buyer has no affiliation or loyalty to the seller. Further, the use of TTP systems for small denominations has been hampered by the proprietary nature of the software needed to establish the transfer of funds between buyers and sellers.

The term "transaction" is generally used herein to describe all manner of interactions over a network of the type noted above. The common element to all transactions is the transfer of data from one party (the "data subject") to another (the "data recipient"). In one type of transaction the "data subject" may be a consumer while the "data recipient" may be a merchant. In another type of transaction the "data subject" may be a student applying to a college while the "data recipient" may be a college receiving information about the student. While the term "electronic commerce" is generally associated with the purchase of goods and services over the Internet, the term encompasses other transactions as well. For example, applications for insurance, college admissions, and loans are transactions that are not purchase transactions. In the same vein, a coupon can be any instrument that has value for a particular transaction. For example, a coupon may represent money or may embody information (such as information necessary to identify the data subject).

Therefore, a need exists for a system that allows a data recipient to issue and accept coupons and other stored value instruments ("SVIs") that may be used at a data recipient's site to purchase during the process of a transaction, where the SVI can be issued by the data recipient or a third party used by the data subject in accordance with conditions established by the issuer of the SVI, is not subject to counterfeiting, and can be expired with minimum involvement by the issuing data recipient. Additionally, a system is needed such that the data subject may use SVIs representing exchangeable value incrementally. A system to provide for merchant invoked Internet commerce is disclosed in U.S. Patent no. 6,092,053, which is incorporated herein by reference in its entirety. The present invention expands on the system disclosed in the '053 Patent to include the use of SVIs in purchase transactions between data subjects and data recipients.

The essence of electronic commerce is the exchange of information. The most common form of electronic commerce entails the purchase of products over the Internet using a credit card. Information necessary to consummate a credit card transaction includes the data subject's name, address, credit card information, and the amount to be charged. While the term "electronic commerce" is generally associated with the purchase of goods and services over the Internet, the term encompasses other transactions as well. For example, applications for insurance, college admissions, and loans are transactions that are not purchase transactions. Hence the term "transaction" is generally used herein to describe all manner of interactions over a network of the type noted above. The common element to all transactions is the transfer of data from one party to another.

A person who wants to send personal data (the "data subject") can either type in the required information each time a transaction is consummated or store the data for retrieval. Typing in data is not only inefficient and prone to errors, but discourages Internet commerce. Using a local software solution is generally considered undesirable, as most such software programs are proprietary to a particular payment system, require the data subject to become skilled in the operation of the program, and are perceived as slow or unwieldy.

Repositories of data subject information exist in the "brick and mortar" world as well as the virtual world of the Internet. Associations like AARP and AAA have large membership databases. Some merchant sites on the web require data subjects to "register" with the merchant. These collections of data subject data have value outside their original purpose of facilitating purchasing. For example, a merchant may provide a registered data subject with certain member benefits. The holder of this data subject data may also exploit this information selling it to third parties for marketing purposes.

While databases of data subject information are inherently valuable, it is not easy for a controller of one of these databases to provide a data subject access to his or her data in a way that facilitates Internet commerce. Even if a data controller could make data subject information available to a data subject, the data controller would have to deal with the costs associated with providing the means of capturing the data subject data needed for a particular transaction and associated with protecting the data. Finally, if a data controller managed to make its data usable for commerce, it might prove difficult to leverage that data by making it available to others authorized by the controller to receive it.

Therefore, a need also exists for a system that allows a controller of data subject information (the "data controller") to collect and securely store information from data subjects, and to make data subject information available to the data subject to send selected information to the controller or to an authorized data recipient over the Internet in a manner that offers security and allows access from any computer. As meant within this disclosure, an authorized data recipient would be a merchant (in the case of a purchase of goods or services), a college (in case of application information), and other parties in situations where information must be repetitively provided to a plurality of recipients. A system to provide this for merchants is disclosed in U.S. Patent no. 6,092,053. The present invention expands the system of the '053 Patent to data controllers and other authorized data recipients (besides simply merchants).

### SUMMARY OF THE INVENTION

One aspect of the present invention is the integration of a stored value instrument (SVI) into network-based transactions. Stored value instruments, as meant in this disclosure, comprise stored value data that relate to, among other things, the value of coupons, information relating to individuals such as address, credit instruments, test scores, and other personal and institutional type information. Thus while the term "stored value instrument" is used herein this is not meant as a limitation. It is used solely to illustrate certain types of uses, such as in purchase of goods and services. The present invention is indeed much broader covering any transaction where the ultimate recipient of information receives that data from an authorized source that stored that data. Thus the terms "stored value instrument" and "stored value data" should be viewed as synonymous.

It is therefore an object of the present invention to allow an SVI to be used to purchase a product over any network.

A further object of the present invention is to allow an SVI to be used to purchase a product over the Internet.

A further object of the present invention is to create an SVI server for storing SVIs.

A further object of the present invention is to allow data recipients to send SVIs to the SVI server to be stored in association with a data subject.

A further object of the present invention is to allow data subjects to send SVIs to the SVI server to be stored in association with a data subject.

A further object of the present invention is to eliminate the need for data recipients to track the expiration of their SVIs.

A further object of the present invention is to allow third parties to create SVIs and to store the SVI on the SVI server in association with an item for use by a data subject purchasing that item.

A further object of the present invention is to allow the creator of an SVI to establish conditions for using that SVI.

A further object of the present invention is to allow issuers of SVIs to establish conditions for using SVIs.

A further object of the present invention is to allow data subjects to create and store an SVI on the SVI server for use in purchasing an item from a data recipient that accepts data subject created SVIs.

A further object of the present invention is to allow a data recipient that accepts data subject and manufacturer created SVIs to obtain value for such SVIs when accepted by that data recipient.

A further object of the present invention is to allow a data subject to use SVIs only when the data subject and/or the SVIs meet the conditions established by the data recipient.

A further object of the present invention is to create an SVI that cannot be easily counterfeited.

A further object of the present invention is to eliminate the need for data recipients to track the value remaining in their SVIs.

A further object of the present invention is to create an SVI server for storing SVI status information that can be accessed easily and transparently by a data recipient.

A further object of the present invention is to permit data subjects to use SVIs incrementally and to combine the value, of separate SVIs issued by a single data recipient.

A further object of the present invention is to permit data subjects to use SVIs to make micropayments to data recipients.

A further object of the present invention is to allow a data subject to use SVIs using data stored on the data repository from any computer connected to the network on which the SVI server resides.

A further object of the present invention is to provide a mechanism for direct marketing or distribution of relevant information to data subjects immediately before, during, or after completion of a transaction.

According to the SVI aspect of the present invention, an implementation may comprise a system for storing, tracking, and using an SVI to effectuate a transaction. The system comprises a network communication device associated with a data subject (the "data subject's NCD"), a computer associated with a data recipient (the "data recipient's computer") and a server (the "data repository") on which the necessary and desirable information about the data subject is stored, a server on which information about SVIs is stored and managed (the "SVIS"), and a server to manage the exchange of value between SVI's issued by data subjects and data recipients that accept such SVIs (the "VES"). The data subject's NCD, the data recipient's computer, and the data repository are connected to a network, such as the Internet, and communicate using communication protocols. The data repository and SVIS are connected or collocated with each other, or connect to each other by a network, such as but without limitation, the Internet and communicate using protocols. The data subject's NCD operates that can interpret and process files from the data recipient's computer and the data repository using software resident on the data subject's NCD (the "NCD software"). The data recipient's computer operates as a web server, provides transaction processing, and performs other functions. The data recipient's computer may be a single device, or may, at the data recipient's discretion comprise a number of devices that may or may not be co-located. The data recipient's computer also operates software ("client software") that communicates with the data repository. The data repository operates data repository software that provides access to information stored in various databases, logs, and/or data structures. The SVIS operates SVIS software that provides access to information stored in various databases, logs, and/or data structures. The value exchange server ("VES") operates VES software that provides access to various databases, logs, and or data structures. The VES and the VES software manage the creation of SVIs by data subjects and the transfer of value data subject-created SVI to the account of the party accepting the SVI. The VES, the data subject's NCD, data recipient computer, and the SVIS are connected to a network, such as the Internet.

The system defined by the data subject's NCD, the data recipient computer, and the data repository allows data subjects known to the data repository to conduct transactions over a network from data recipients known to the data repository, and allows such data recipients to receive information relating to that transaction. This SVI aspect of the present invention allows the data subject to conduct transactions using SVIs issued by the data recipient, data subjects, or third parties in accordance with conditions established by the issuer of the SVI and/or the data recipient.

According to the data controller aspect of the present invention, it is an object of the present invention to reduce the number of steps a data subject is required to perform in order to complete a transaction over any network.

A further object of the present invention is to reduce the number of steps a data subject is required to perform in order to complete a transaction over the Internet.

A further object of the present invention is to eliminate storage and retrieval software that is permanently stored on the data subject's computer used generally herein as a "network communication device" or NCD.

A further object of the present invention is to create a data repository for storing data subject information that can be operated by a data controller and accessed easily and transparently by a data subject.

A further object of the present invention is to allow authorized data recipients to access purchasing information relating to data subjects who are registered with data controllers without requiring a new registration.

A further object of the present invention is to allow authorized data recipients to register new data subjects whose data will reside with data controllers in a data repository.

A further object of the present invention is to allow a data subject to conduct transactions using data stored in the data repository from any computer connected to the network on which the data repository resides.

A further object of the present invention is to use the data repository to aid the data subject in distributing all manner of information, not just purchase/money information, to a variety of recipients when those recipients are to receive essentially the same information from one recipient to the next.

A further object of the present invention is to provide a mechanism for direct marketing or distribution of relevant information to data subjects immediately before, during, or after completion of a transaction using a the data repository.

The present invention may be embodied as a system for presenting a data subject's information to an authorized data recipient's computer to allow transactions to be consummated. The transaction may be the simple transmission of selected data subject information or for a purchase and sale of goods or services. The nature of the transaction will determine what data subject data is stored and presented. The system comprises a network communication device (NCD) associated with a data subject (the "data subject's NCD"), a computer associated with an authorized data recipient (the "authorized data recipient's computer"), and a server (the "data repository") on which the necessary and desirable information about the data subject is stored. The data subject's NCD, the authorized data recipient's computer, and the data repository are connected to a network, such as, but without limitation, the Internet, and communicate using communication protocols. The data subject's NCD can interpret and process files from the data recipient's computer and the data repository using software resident on the data subject's NCD (the "NCD software"). The authorized data recipient's computer operates a web server, provides transaction processing, and performs other functions. The authorized data recipient's computer may be a single device, or may, at the authorized data recipient's discretion comprise a number of devices that may or may not be co-located. The authorized data recipient's computer also operates software ("client software") that communicates with the data repository. The data repository, which is controlled by a data controller, operates data repository software, which provides access to information stored in various databases, logs, and/or data structures of the data repository. Data controllers specify a list of authorized data recipients to the data repository with whom the data controllers registered data subject information can be shared. Note that if the data controller is also a user of data subject information, the data controller will be acting as an authorized data recipient.

The present invention allows data subjects to send transaction information over a network and allows authorized data recipients to receive data subject information relating to that transaction.

In embodiments that include either or both of the SVI and data controller aspects of the present invention, the transaction may involve the purchase of goods and services. The network connecting the data subject's NCD, the authorized data recipient's computer, and the data repository is a fixed IP network (e.g., the Internet), and the transaction data is purchasing data. However, the invention is not limited to a purchase transaction. As noted earlier, other types of transactions (not just purchases) where information is exchanged are within the scope of the present invention.

During the web surfing process, a data subject browses an authorized data recipient's Web site via the data subject's NCD. The NCD may be any communications device connected to the network. In this example, it is assumed that the NCD is a computer. The authorized data recipient's Web site invites the data subject to send a set of data subject information to the authorized data recipient thereby consummating a transaction (an "affer").

The authorized data recipient' Web site also operates client software. When the data subject accepts the authorized data recipient's offer to consummate a transaction, the client software sends both a file readable by the NCD software and the authorized data recipient's offer to the NCD software that is resident on the data subject's NCD. The NCD software readable file includes information to identify the authorized data recipient, an address for the authorized data recipient's Web page and instructions that instruct the NCD software to communicate with the data repository software. The authorized data recipient's offer passes through the data subject's NCD to the data repository software president on the data repository.

The data repository software verifies that the authorized data recipient is known to the data repository and identifies the data controllers that have authorized the authorized data recipient to receive data subject information. The data repository then returns a message to the NCD software and instructs the NCD software to display a dialog box within an area reserved for the dialog box within the authorized data recipient's Web page. The content of this dialog box depends on whether or not the data subject is known to the data repository software.

If the data subject is known to the data repository software, because of prior registration of the data subject, the data repository software determines if the data subject was registered by or in association with a data controller and if that data controller has authorized the authorized data recipient that sent the offer to receive the data subject's information. If the authorized data recipient is so authorized, the data repository software takes information contained in the authorized data recipient's offer, formats the information to allow the NCD software to display the authorized data recipient's offer, and sends the authorized data recipient's offer to the data subject's NCD where the authorized data recipient's offer is displayed by the NCD software in a dialog box within the area reserved for the dialog box within the authorized data recipient's Web page. The data subject is prompted to decide whether or not to complete the transaction. Typically, this communication occurs by the data subject clicking on an object resulting in a message being communicated to the data repository.

If the data subject elects to complete the transaction, the data repository software forwards the data subject's information to the data recipient's computer. The information includes information from the data recipient's offer and the data subject's information (e.g., credit card number, address, shipping address, email address, and data subject identifier) that is stored on the data repository. The data recipient's computer then uses the payment information to complete the transaction and may use the data subject identifier to establish a profile of the data subject.

If the data subject is unknown to the data repository software, or if the data subject is known to the data repository software but the authorized data recipient sending the offer is not authorized by the data controller associated with the data subject to receive such data subject information, the data repository software sends a form to the data subject's NCD which is displayed in a dialog box within the area reserved for the dialog box within the authorized data recipient's Web page. The form prompts the data subject to provide the information necessary to complete the transaction. Once the data subject provides sufficient information to complete the transaction, the data repository software prompts the data subject to complete the transaction.

If the data repository software does not know the data subject, the data subject may be asked to register with the data repository under several scenarios. For example, the data subject may have reached the authorized data recipient's page through a link associated with the data controller. If the authorized data recipient is authorized by the data controller to receive data subject information, at the completion of the transaction with the authorized data recipient the data subject may be prompted to elect to have the information retained on the data repository for future use (the process herein referred to as "registration"). If the data subject answers "no", then the information is stored in a temporary data structure. Information stored in the temporary data structure is retained for a set amount of time and is not available for reuse by the data subject. If the data subject answers "yes", then the information pertaining to the data subject is stored in a data structure intended for the retention and future use by the data subject and becomes a registered data subject of the data controller. The registration process is disclosed in U.S.P. 6,092,053.

If the data subject elects to register with the data repository software, during the registration process, the NCD software is sent an NCD software identifier. In the preferred embodiment, the NCD software is a browser and the browser identifier is a cookie. The NCD software identifier contains data that are crypto graphically protected to enhance security. The NCD software identifier allows the data repository software to identify the NCD software and permits a data subject to authenticate himself or herself, thereby permitting the data repository software to use the data subject's stored information in future transactions.

The system also allows data subjects who are registered on a different NCD to authorize the data repository software to use the data subject's stored information. This situation occurs when the data repository software cannot identify the NCD software identifier because there is no NCD software identifier in the NCD software or the NCD software identifier cannot be used to identify the particular data subject using the NCD software.

Since the system of the present invention establishes communication links between the authorized data recipient's computer and the data repository, the system can be optimized in several respects. For example, the price of goods or services may be affected by the relationship between the data controller and authorized data recipients, the location to which the item is to be shipped, the method of shipping, and by tax obligations. The data repository software communicates information pertaining to the data subject to the authorized data recipient's computer permitting the authorized data recipient's computer to determine a "final" price based on the data subject's information, i.e., shipping address and/or preferences.

Another example of optimization is the ability of the data repository software to present a data controller or authorized data recipient's brand, both brands, or other "brand" to the NCD software. If the data subject is making a purchase (first or repeat) at a authorized data recipient Web site, a top graphic and colors used by the data repository prompt can be specified by the authorized data recipient offer and a bottom graphic used by the data repository prompt can be specified in accordance with the data controller involved. The data repository software can also associate a data subject with an identification code that can be presented to the authorized data recipient's computer, thus allowing the authorized data recipient to "recognize" a data subject and provide customer-specific messages, displays, and offers. The data repository software can tailor its communication with the data subject's NCD in accordance with a profile created by the data repository software. The profile is based upon preferences chosen by the data subject or created by the data repository software based on the data subject's behavior, from preferences chosen by the data controller or authorized data recipient, by a branding party, or the like.

With respect to data subjects, the system is optimized to provide all of the transaction information to the data subject thereby allowing the data subject to verify the information and make a decision to complete a transaction without further information input from the data subject. The system can also establish a dialogue between the data subject's NCD and the data repository to permit the data subject to select from options such as which credit card to use, the shipping address, and the shipping means.

The relationship between the data controller and authorized data recipient further allows the customer to shop at a wider variety of authorized data recipients without having to repeatedly register with each one.

The SVI embodiments of the invention provide the data subject the ability to use a stored value instrument to purchase goods and services. In order for an SVI to be available for use by the data subject it must first be stored in the SVIS. This process can occur in a number of different ways.

During a purchase transaction, the data recipient offer can include information relating to an SVI (e.g., an SVI identifier, the value assigned to the SVI, expiration date, conditions of use, etc.). The SVI information is sent to the data repository with the data recipient offer and is stored in the SVIS in a record associated with the data subject and the data recipient. The conditions of use may include any number of requirements. For example, the SVI may be deleted or voided if the data recipient offer in which the SVI was embedded is not consummated by the data subject or is rejected by the data recipient. Alternatively, the SVI may be applied only to the current order or orders added to a single shopping cart. The SVI may be value or may represent an entitlement to discount based on purchases made during a period of time. Additionally, the SVI may be a means of authenticating a data subject to a data recipient. This list of conditions is illustrative only and should not be construed as a limitation. The SVI identifier is also stored in the data repository.

A data recipient may send an SVI to the SVIS without a data subject receiving an offer to purchase an item. For example, upon the arrival of a data subject to a data recipient's site, the data recipient's computer delivers the data recipient's home page to the data subject's NCD. The home page may include information relating to an SVI without including an offer. In this embodiment, the data repository may not return a message to the data subject's NCD, or may send a graphic advising the data subject that an SVI is available and the conditions that are associated with its use (e.g., "use in the next ten minutes and we'll double it").

In another embodiment, the data subject finds a coupon on a web page and clicks on a link. The link refers the data subject's NCD software to a page that contains the SVI information.

In yet another embodiment, the data recipient (or an independent SVI authority) emails a data subject a link that refers the data subject's NCD software to a page that contains the SVI software.

In still another embodiment, the data recipient can communicate directly with the data repository and instruct the data repository to establish an SVI for a single data subject or multiple data subjects. As noted above, a data subject is assigned an identifier by the data repository. A data recipient that has completed a transaction with a data subject will receive this identifier. To create an SVI for a previous customer, a data recipient sends the data subject identifier along with information relating to an SVI to the data repository. The data repository then sends the information relating to the SVI to the SVIS and a record is created on behalf of the data subject.

SVIs may be also be issued by third parties. For example, a manufacturer or distributor may issue a "coupon" that may be used to purchase certain products when sold by a participating data recipient. Third party SVIs may be "loaded" into the SVIS by the issuing authority by communicating directly with the data repository or the VES. Third party SVIs are not associated with a particular data subject. Rather, the data recipient indicates that the data recipient accepts a third party SVI by including the SVI identifier in the data recipient offer. When a data subject uses a third party SVI, the SVIS communicates with the value exchange server (VES) to transfer value from an account held by the issuer of the SVI to the data recipient accepting the SVI.

A data subject may also establish a relationship with the VES and create an SVI, which SVI may be used with data recipients that also have an account with the VES. Data subject SVIs may be "loaded" into the SVIS by the VES. SVIs issued by data subjects are not associated with a particular data recipient. Rather, the data recipient indicates that the data recipient accepts a data subject SVI by including a "wild card" SVI identifier in the data recipient offer. When a data subject uses an SVI created by that data subject, the SVIS communicates with the value exchange server (VES) to transfer value from an account held by the issuer of the SVI to the data recipient accepting the SVI.

If the data subject elects complete a transaction, the data repository software checks the SVIS to determine if an SVI is available to the data subject for that transaction and if the data subject meets all of the conditions for use as established by the data recipient and the issuer of the SVI. If one or more SVIs are available that meet all the conditions for use of an SVI, the data subject is advised of that he or she may elect if and how to use the available SVIs. For example, in a purchase transaction, the data subject would be advised of the amount of value remaining in each such SVI. The data subject can then elect not to use a particular SVI, or to apply some or all of the value of the available SVI towards the purchase price. If multiple SVIs are available, the data subject can elect to combine the value of two or more SVIs and apply the combined value against the purchase of the item.

Additional objects and advantages of the present invention will be apparent in the following detailed description read in conjunction with the accompanying drawing figures.

### BRIEF DESCRIPTION OF THE DRAWINGS

Fig. 1 illustrates a block diagram view of the overall architecture of an SVI embodiment of the present invention.

Fig. 2A illustrates a flowchart for a process of consummating a transaction over a network according to an SVI embodiment.

Fig. 2B further illustrates a flowchart for a process of consummating a transaction over a network according to an SVI embodiment.

Fig. 2C further illustrates a flowchart for a process of consummating a transaction over a network according to an SVI embodiment.

Fig. 3 illustrates a block diagram view of the overall architecture of a data controller embodiment of the present invention.

Fig. 4A illustrates a flowchart for a process of consummating a transaction over a network according to a data controller embodiment.

Fig. 4B further illustrates a flowchart for a process of consummating a transaction over a network according to a data controller embodiment.

Fig. 4C further illustrates a flowchart for a process of consummating a transaction over a network according to a data controller embodiment.

Fig. 4D further illustrates a flowchart for a process of consummating a transaction over a network according to a data controller embodiment.

### DETAILED DESCRIPTION OF THE INVENTION

For the purpose of this application, the term software is deemed to include instructions.

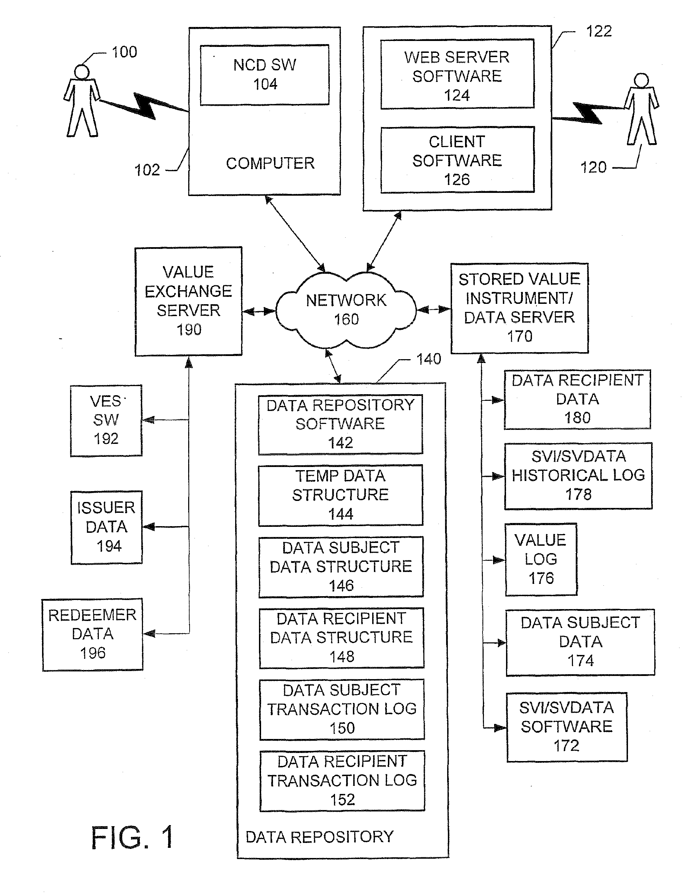

Referring to **Fig.1****,** the overall architecture of an SVI embodiment of the present invention is illustrated. This embodiment of the present invention allows data subject **100** to conduct a transaction over network **160** and allows data recipient **104** to receive information relating to the transaction using SVIs issued by, or accepted by, data recipient.

To complete a transaction, data subject **100** uses data subject's NCD **102.** Data subject's NCD **102** can be a computer or a wireless device and operates software that is either a Web browser or emulates a Web browser (the "NCD software") **104.** Data subject's NCD software **104** allows data subject **100** to download and display Web pages or other information from the data recipient's computer **122.**

To receive information relating to the transaction, data recipient **120** uses data recipient computer **122.** Data recipient computer **122** operates Web server software **124** and client software **126.** Web server software **124** displays a data recipient's Web pages. Client software **126** allows data recipient **120** to communicate with the Data repository (the "data repository") **140.**

In this SVI embodiment, data repository **140** comprises data repository software **142** that communicates with SVIS **170** and gathers and stores the purchasing information to complete a purchasing transaction over common network **160,** temporary data structure **144** which stores data subject information for a limited amount of time and which is generally not to be used in future transactions, data subject data structure **146** which stores data subject information which can be used in future transactions, data recipient data structure **148** which stores information pertaining to different data recipients, data subject transaction log **150** which stores information pertaining to the transactions for registered data subjects, and data recipient transaction log **152** which stores information pertaining to transactions for registered and non-registered data subjects.

In this SVI embodiment, the SVIS **170** comprises SVIS software **172** which gathers and stores the SVI information associated with data subject **100** and data recipient **120** and relays that information to data repository software **142,** data subject SVI data structure **174** that stores information regarding SVIs held by data subject **100,** SVI value log **176** which stores information regarding the value held in each SVI held by data subject **100,** SVI history log **178** which stores the usage of each SVI held by data subject **100,** and data recipient data structure **180** which stores information pertaining to SVIs accepted by data recipient **120.** SVIS **170** also communicates with VES **190.**

In this SVI embodiment, the VES **190** comprises VES software **192,** which manages accounts held by issuers of SVIs (e.g., data subjects and manufacturers), data recipient, and redeemers of SVIs (e.g., data recipients). Issuer data structure **194** includes information relating to the identity of the issuer and information relating to the SVIs created by the issuer (comprising, but without limitation, initial value, current value, conditions of use, and an SVI identifier). Redeemer data structure **196** includes information relating to the identity of the redeemer and information relating to issuers SVIs redeemed by the data recipient (issuer information, value accepted, date, SVI identifier,), and information relating to the unloading of the value of an SVI accepted by the acceptor (SVI identifier, amount accepted, amount unloaded, date unloaded).

Data subject NCD **102,** data recipient computer **122,** and data repository **140** are connected to a network **160.** SVIS **170** is connected to data repository **140** over network **160.** VES **190,** Data subject NCD **102,** data recipient computer **122,** and SVIS **170** are also connected to **160.** This embodiment of the present invention can operate over the Internet, intranet, LANS, and WANS, and wireless networks, however this list should not be construed as a limitation. In this SVI embodiment, the network is the Internet. While NCD **122,** computer **122,** data repository **140,** SVIS **170,** and VES **190** are depicted are shown connected to the same network **160,** this is not a limitation. Multiple networks of various types may used to connect the components as the nature of the communications between these components dictates.

Data repository software **142** gathers and stores the information needed to complete a transaction over common network **160.** Data repository software **142** gathers the information directly from data subject **100,** from data subject data structure **146** or from both. If additional purchasing information is needed, data repository software **142** prompts data subject **100** for the information.

Temporary data structure **144** stores information relating to a particular interaction between data subject **100** and data recipient **120.**

Data recipient data structure **148** stores information relating to data recipients, including data recipient **120,** that have completed the registration process with the operator of data repository **140** (either directly or through the data recipient). The information in data recipient data structure **148** represents information that is necessary to identify data recipient **120** and data recipient computer **122.** This information includes contact information, data recipient identification number, network location(s) for the data recipient computer **122,** payment card type, accepted currencies, an SVI identifier that indicates that the data recipient accepts SVIs and allows the data repository to associate an SVI with data recipient 120, and payment methods (e.g., electronic check, micropayments), however this information should not be construed as a limitation.

Data subject transaction log **150** stores information relating to transactions performed by registered data subjects. Data recipient transaction log **152** stores information relating to transactions performed by registered and non-registered data subjects, including data subject **100.** The operator of data repository software **142** can allow data subjects and data recipients' access to the information contained in their respective data structures as deemed necessary. For instance, data subject **100** can be given a summary of the data subject's transactions over a period of time. Data recipient **120** can be given a summary of the data recipient's transactions over a period of time.

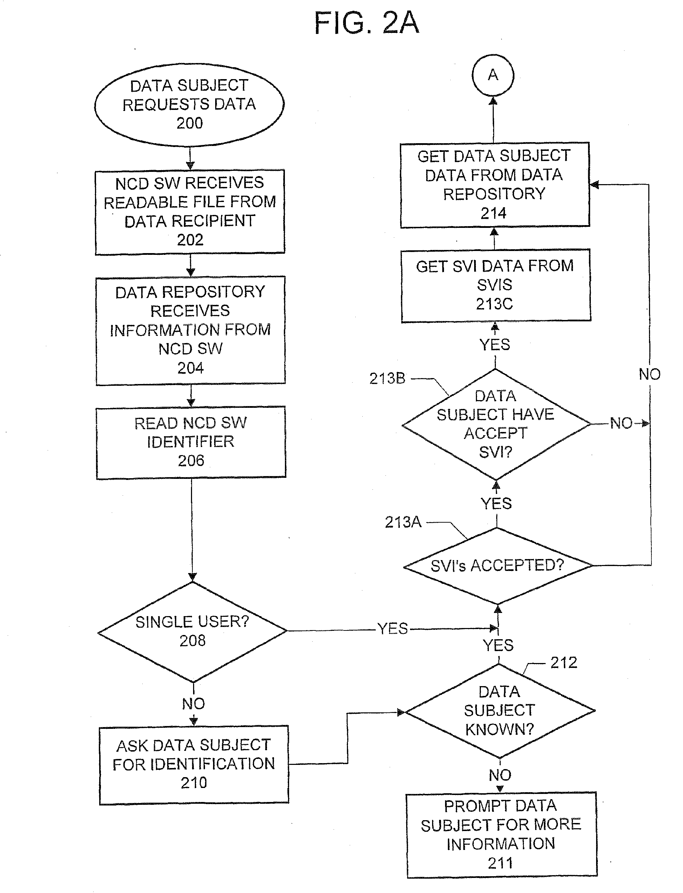

Referring to **Fig. 2A****,** a process of purchasing an item over a network according to an SVI embodiment is illustrated. The following process is all exemplary embodiment of the present invention. In alternate embodiments, similar processes can occur in different orders. In the exemplary embodiment, the data subject **100** and the data recipient **120** are both registered with and known to data repository **140.** The registration information for both data recipients and data subjects is shared with the SVIS and the VES. The process by which data subject **100** becomes registered and the handling procedures in the even one or both are not registered are described in U.S.P. 6,092,053.

The purchasing process starts with a data subject requesting a data recipient's offer **200** from a data recipient. In response to the data subject's request, the data recipient's computer responds by sending a NCD software readable file and the data recipient's offer to the data subject's NCD **202.** The data subject's NCD software processes the NCD software readable file and sends the data recipient's offer and a message to the data repository **204.**

The data recipient's offer includes the following information, however this information should not be considered a limitation: data recipient identifier, price of the item, a form of digital signature of the data recipient, a final price indicator, an SVI flag that denotes whether SVIs are accepted for this transaction, an SVI identifier that allows the data recipient to identify SVIs issued by third parties (e.g., data subjects, others data recipients and manufactures) that data recipient will honor, SVI information relating to any SVIs included in the data recipient offer, and a transaction number. The data recipient identifier identifies the data recipient who is offering the item for sale. The price of the item is cost to purchase the item. A digital signature of the data recipient is used to ensure the validity of the offer. The final price indicator is used to indicate whether the final cost for the item is affected by the data subject's shipping address and/or shipping preference. The SVI flag is used to indicate if data recipient SVIs can be used to purchase the item. This flag allows the data recipient to indicate that coupons, even if available, are not accepted for this transaction. Use of the flag allows the transaction to proceed without having to communicate with the SVIS.

An SVI identifier allows a customer to use, and a data recipient to accept, an SVI issued by a party other than the data recipient (e.g., the data subject, a manufacturer or another data recipient. A special identifier can be used to indicate that the data recipient accepts a data subject-issued SVI.

As previously described, a data recipient may include SVI information in the data recipient offer. If any SVI information included in the data recipient offer, that information is stored on the SVIS. The transaction number is used for tracking purposes. The transaction number does not contain any product identifying information. The transaction number acts as an identifier for identifying a transaction.

The message sent from the data subject's NCD software to the data repository indicates whether the NCD software contains a NCD software identifier. In the preferred embodiment, the NCD software identifier is a cookie and comprises a unique identifier that differentiates it from all other identifiers. A NCD software identifier identifies the data subject NCD software on a specific data subject computer. The data repository software receives and processes the message to determine if the data subject's NCD software contains an identifier that identifies a data subject that matches a data entry in a file in the data subject data structure of the data repository **206.** The data repository software also determines whether a single user or multiple users have used the data subject's NCD software **208** by checking the data subject data structure and by permitting data subjects to access their data from remote computers.

If the data repository software determines that more than one user is using the data subject's NCD **208,** the data repository software asks for user identification **210.** Based on the user information, the data repository determines if the user is known **212.** If so, user data is retrieved from the data repository. If the user is not known, the data repository prompts the use to enter further information **211** to become registered or to provide information to complete the transaction. The processes by which these features are implemented are described in detail in U.S.P. 6,092,053.

The data subject's response is sent back to the data repository where the data repository software then determines if the data subject is known to the data repository software **212.** A known or registered data subject is a data subject who has previously registered with the data repository software and whose information matches information supplied by the data subject during a prior registration. If the data repository software determines that the information provided by the data subject is insufficient to identify the data subject, then the data repository software prompts the data subject for the same information again. The operator of the data repository can set the number of iterations that the data subject is prompted for the data subject's identity. If the data subject's response matches the information the data subject supplied during registration, then the data repository software checks the SVI flag in the data recipient's offer to determine if the data recipient accepts SVIs for this transaction **213A.** If SVIs are not accepted, the process continues at **214** described below. If SVIs are accepted, the data repository software checks the data recipient offer for SVI identifiers to determine if any third party-issued SVIs are accepted by data recipient. The data repository software then uses the data subject identity information and the data recipient identity information to accesses data subject SVI data structure **174** on SVIS **170** to determine if data subject **100** has any SVIs that are accepted by data recipient **213B.** The SVIS software then checks each SVI held by the data subject and accepted by the data recipient to determine that the conditions established by the data recipient for use of that SVI have been met. Depending on the nature of the conditions, the SVIS software may resolve a particular condition by reference to data subject SVI data structure **174,** or may refer a particular condition to the data repository software for resolution by access to data subject data structure **146** that resides on the data repository. If the data subject does not have any SVIs accepted by the data recipient, the process continues at **214.** The data repository software gathers information related to each SVI held by the data subject, accepted by data recipient, and for which all conditions have been met, if any, **213C.** The data repository software accesses and gathers the data subject's information that is stored in the data subject data structure (CDS) **214.**

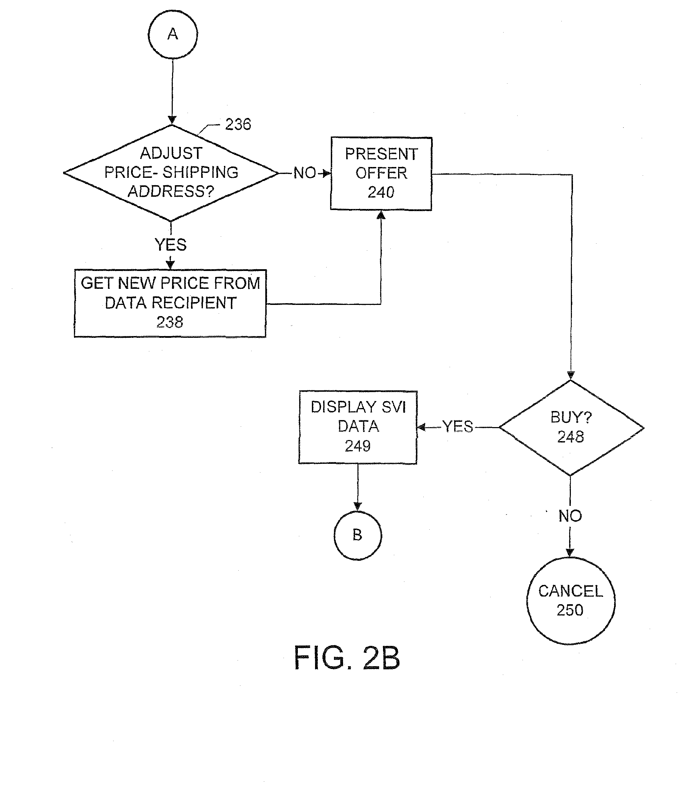

Referring to **Fig. 2B****,** the data repository software reads the final price indicator in the data recipient's offer to determine if the price needs to be adjusted due to the data subject's shipping address and/or shipping preference **236.** If the price is affected by the data subject's shipping address and/or shipping preference, then the data repository software communicates the required information to the data recipient to calculate a new price based on the data subject's shipping address **238.** In the preferred embodiment, the data repository software only sends the city, state, country, and mail code information to the data recipient's computer. This information is limited to permit the revised price calculation without having to disclose personal information relating to the data subject.

In alternate embodiments, the data subject's address can be the data subject's email address or a facsimile number.

Once the data recipient responds with the revised price or if the price was not affected, the data repository software presents the data recipient's offer to the data subject **240.**

The data recipient's offer is displayed to the data subject and the data subject is presented with a buy decision **248.** The data subject has several options available at this step: the data subject can elect to buy the item, change the data subject's information and buy the item, or cancel the transaction. If the data subject elects to change the data subject's information, the data subject must still decide to either buy the item or cancel the transaction after changing the information.

If the data repository software determines that the data subject has one or more SVIs accepted by the data recipient, data subject, the data subject will be presented with an option to use one or more SVIs to purchase the item. The data subject will be offered a list of SVIs available, the value remaining in each SVI accepted by the data recipient, and any expiration information applicable to an SVI. The information is then displayed **249** for the data subject. The data subject may then choose to pay without using an SVI, or to apply any portion of the remaining value of one or more SVIs to the purchase price of the item.

The data subject also has the option of changing the data subject's information. The data subject may wish to change such information for such reasons as the data subject does not agree with the selection by the data repository software or the information contains an error. For instance, if the data subject wishes to change the shipping address, the data subject can enter a new shipping address. In some instances, the data subject can have a plurality of possible entries into the same information block with a preferred entry. In such a situation, the data repository software chooses the preferred information to enter into the information block. The data repository software chooses the information via any selection process known in the art, such as most popular, last used, first used, etc.

However, the data repository software cannot enter information into an information block if the data recipient will not allow such an entry. For instance, a data recipient may only accept the ACME credit card and the data subject has not previously used an ACME credit card to purchase an item using the present invention. In such a situation the data repository software prompts the data subject to provide an acceptable form of payment. Information options are available to the data subject in the form of directory of addresses, shippers, shipping methods, credit cards, and other information options.

If the data subject declines to purchase the item, then the transaction is canceled, then the information held in the temporary data structure is deleted, the dialogue ends and the transaction is terminated **250.**

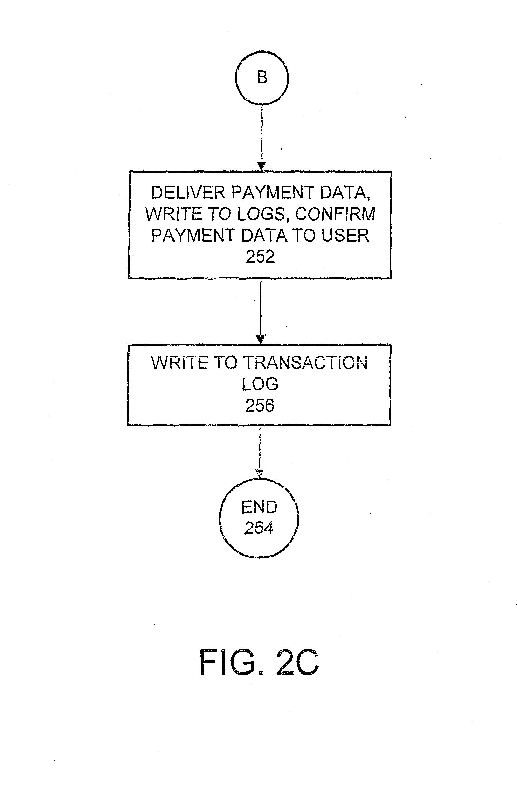

Referring to **Fig. 2C****,** if the data subject elects to purchase the item, then the information regarding the transaction is delivered to the data recipient's computer, information is written to the data recipient transaction log, and a message confirming the transaction is sent to the data subject's NCD. The information regarding the transaction is written to the data subject transaction log **256.** Additionally, if the data subject elects to use an SVI to purchase an item, the data repository software updates value log to reflect the new value of each SVI used in the transaction and writes a record of the usage to SVI history log **252** (see also Fig. 1). If a third party-issued SVI was used, then SVIS software sends a record to the VES, which updates issuer data structure **192** and redeemer data structure **194** of the VES (see also Fig. 1) by transferring the value of the SVI from the issuer's account to the redeemer's account. In the various SVI embodiments, the communications among the different parties can be encrypted in any manner known in the art. In addition, some of the communications can be accomplished in different ways. For example, in an alternate embodiment, communications between the data repository and the data recipient computer can occur using a separate communication link. The communication link can be a direct link between the data recipient and the data repository. Using this separate link can ensure against unauthorized transactions. The various links may also be wired or wireless as in the case with various Internet relay wireless appliances (telephones and the like).

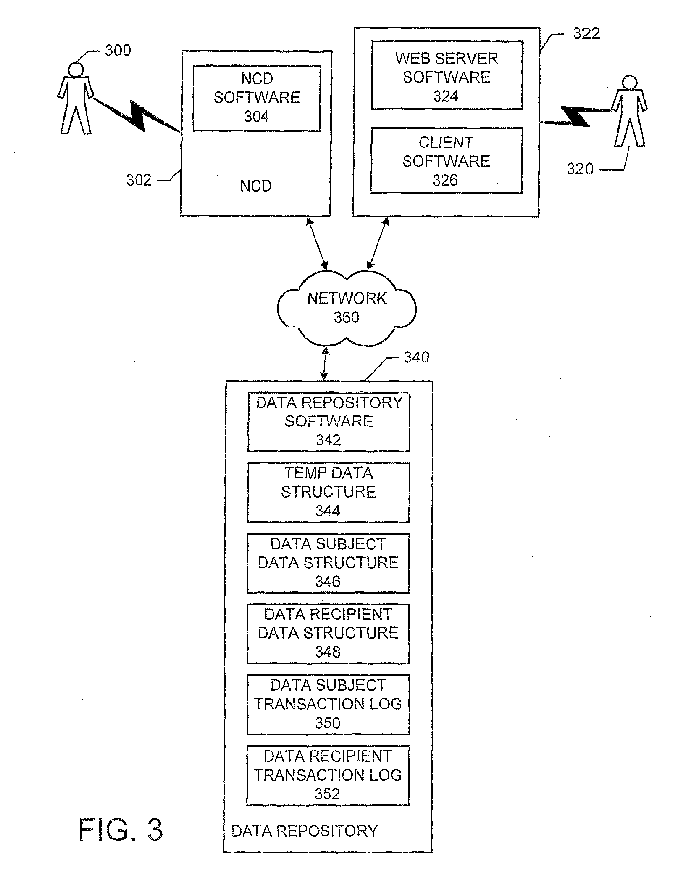

Referring to **Fig. 3****,** the overall architecture of a data controller embodiment of the present invention is illustrated. The present invention allows a data subject **300** to conduct a transaction over a network **360** and allows an authorized data recipient **320** of a data controller (not shown) to receive information relating to the transaction.

To complete a transaction, the data subject **300** uses data subject network communication device ("consumer's NCD") **302.** Data subject's NCD **302** can be a computer or a wireless device and operates software that is either a Web browser or emulates a Web browser (the "NCD software") **304.** In either case, the NCD software has the requisite capability of displaying the information supplied by data recipient computer **322.** The NCD software **304** allows data subject **300** to download and display Web pages or other information from the authorized data recipient's computer **322.**

To receive information relating to the transaction, authorized data recipient **320** uses authorized data recipient's computer **322.** Data recipient's computer **322** operates Web server software **324** and client software **326.** Web server software **324** displays an authorized data recipient's Web pages. Client software **326** allows authorized data recipient **320** to communicate with the data repository (the "data repository") **340.** An authorized data recipient may be an authorized data recipient for multiple data controllers, but only needs to load a single copy of the client software **326.**

In this data controller embodiment, data repository **340** is under the control of a data controller although this is not meant as a limitation since the data repository need not be under control of the a data controller but can operate independently. However, for this embodiment the data repository is under the control of a data controller and comprises data repository software **342** which gathers and stores the transaction information of data subjects registered with a data controller (or on behalf of a data controller through a authorized data recipient) to complete a transaction over common network **360,** temporary data structure **344** which stores data subject information for a limited amount of time and cannot be used in future transactions, data subject data structure **346** which stores data subject information associated with a data controller that can be used in future transactions, authorized data recipient data structure **348** which stores information pertaining to the data controller or authorized data recipient, data subject transaction log **350** which stores information pertaining to the transactions for registered data subjects, and authorized data recipient transaction log **352** which stores information pertaining to transactions for registered and non-registered data subjects.

Consumer NCD **302,** data recipient's computer **322,** and data repository **340** are connected to common network **360.** This data controller embodiment of the present invention can operate over various types of common networks both wired and wireless. The present invention can operate over the Internet, cable systems, satellite systems, wireless networks, intranets, LANS, and WANS however this list should not be construed as a limitation. In the preferred embodiment, the common network is the Internet.

It should also be noted that a network **360** may actually comprise more than one network. This would be the case where the data subject's NCD is a wireless device which must first communicate over a wireless network and then over the Internet.

Data repository software **342** gathers and stores the information needed to complete a transaction over common network **360.** Data repository software **342** gathers the information directly from data subject **300,** from data subject data structure **346** or from both.

Temporary data structure **344** stores information relating to a particular interaction between data subject **300** and authorized data recipient **320.**

Authorized data recipient data structure **348** stores information relating to authorized data recipients associated with the data controller, including authorized data recipient **320,** that have completed the registration process with the operator of data repository **340** (either directly or through the authorized data recipient on behalf of a data controller). The information in authorized data recipient data structure **348** represents information that is necessary to identify authorized data recipient **320** and authorized data recipient computer **322.** This information also includes contact information, authorized data recipient identification number, data controller information, network location(s) for the authorized data recipient computer **322,** the type of transaction accepted, accepted payment card types, accepted currencies, and payment methods (e.g., electronic check, micropayments). This list of information should not be construed as a limitation and is illustrative only.

Consumer transaction log **350** stores information relating to transactions performed by registered data subjects. Authorized data recipient transaction log **352** stores information relating to transactions performed by registered and non-registered data subjects, including data subject **300.** The operator of data repository software **342** can allow data subjects and authorized data recipients access to the information contained in their respective data structures as deemed necessary. For instance, data subject **300** can be given a summary of the data subject's transactions over a period of time. Authorized data recipient **320** can be given a summary of the authorized data recipient's transactions over a period of time.

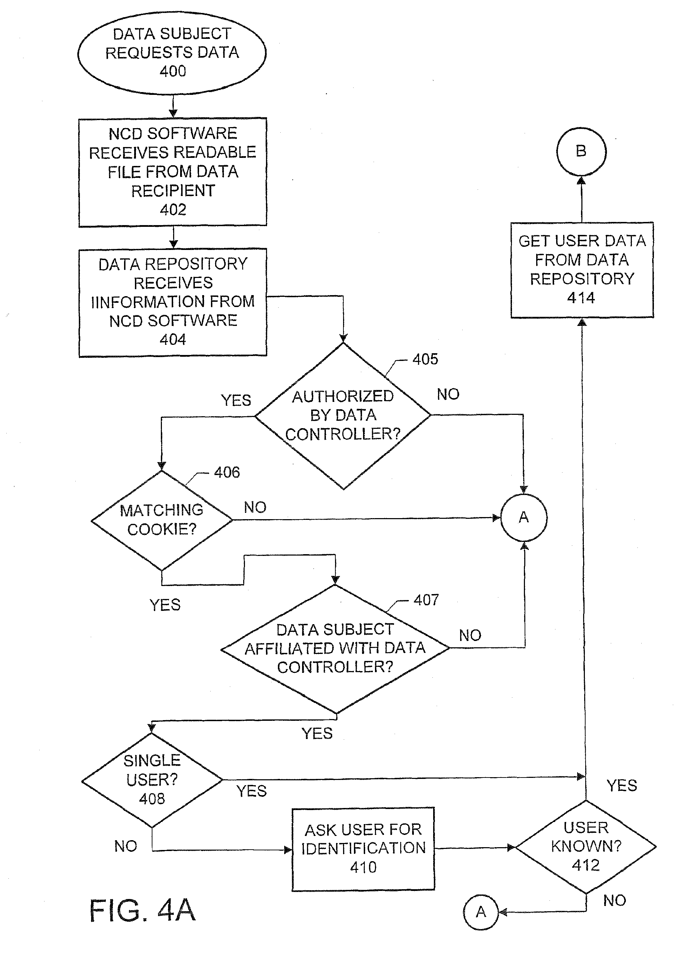

Referring to **Fig. 4A****,** a process of purchasing an item over a network according to a data controller embodiment is illustrated. The following process is an exemplary embodiment of the present invention. In alternate embodiments, similar processes can occur in different orders. Additionally, a transaction involving the exchange of information may involve the storage and retrieval of data different from that described in the following example.

In this exemplary embodiment, data subject **300** and authorized data recipient **320** are registered with and known to data repository **340.** The process by which data subject **300** becomes registered and the handling procedures in the even one or both are not registered are described in U.S.P. 6,092,053.

The purchasing process starts with a data subject requesting an authorized data recipient's offer **400** from an authorized data recipient. In response to the data subject's request, the authorized data recipient's computer responds by sending both a file that is readable by the NCD software and the authorized data recipient's offer to the data subject's NCD **402.** The NCD software processes the browser readable file and sends the authorized data recipient's offer and a message, which is received by data repository **404.** The authorized data recipient's offer includes the following information, however this information is not meant as a limitation since other data types may also be useful: authorized data recipient identifier, price of the item, a form of digital signature of the authorized data recipient, a final price indicator, and a transaction number. The authorized data recipient identifier identifies the authorized data recipient who is offering the item for sale. The identifier is used to confirm that the authorized data recipient is know to the data repository and to associate the authorized data recipient with one or more data controllers **405.** The price of the item is cost to purchase the item. A digital signature of the authorized data recipient is used to ensure the validity of the offer. The final price indicator is used to indicate whether the final cost for the item is affected by the data subject's shipping address and/or shipping preference. The transaction number is used for tracking purposes. The transaction number does not contain any product identifying information. The transaction number acts as an identifier for identifying a transaction.

The message sent from the NCD software to the data repository indicates whether the browser contains a browser identifier (an NCD software identifier). In the preferred embodiment, the browser identifier is a cookie and comprises a unique identifier that differentiates it from all other identifiers. A browser identifier identifies the data subject browser on a specific data subject computer. The data repository software receives and processes the message to determine if the NCD software contains an identifier that identifies a data subject that matches a data entry in a file in the data subject data structure of the data repository **406.**

The data repository software also determines whether a single user or multiple users have used the NCD software by checking the data subject data structure and by permitting data subjects to access their data from remote computers. The processes by which these features are implemented are described in detail in U.S.P. 6,092,053.

If the data repository software determines that the information provided by the data subject matches the information the data subject supplied during registration, then using the authorized data recipient identifier included in the offer sent to data subject computer (refer to Fig. 3, **302**) by authorized data recipient computer (refer to Fig. 3, **322**), the data repository software will determine if the authorized data recipient that delivered the offer to the data subject has been authorized by the data controller to receive data subject information stored on the data repository **407.**

If the data repository software determines that the information provided by the data subject matches the information the data subject supplied during registration and the authorized data recipient is authorized by the data controller, then the data repository software accesses and gathers the data subject's information which is stored in the data subject data structure **414.**

If the data repository software determines that more than one user is using the data subject's NCD **408,** the data repository software asks for user identification **410.** Based on the user information, the data repository determines if the user is known **412.** If so, user data is retrieved from the data repository. If the user is not known, the data repository prompts the use to enter further information to become registered or to provide information to complete the transaction.

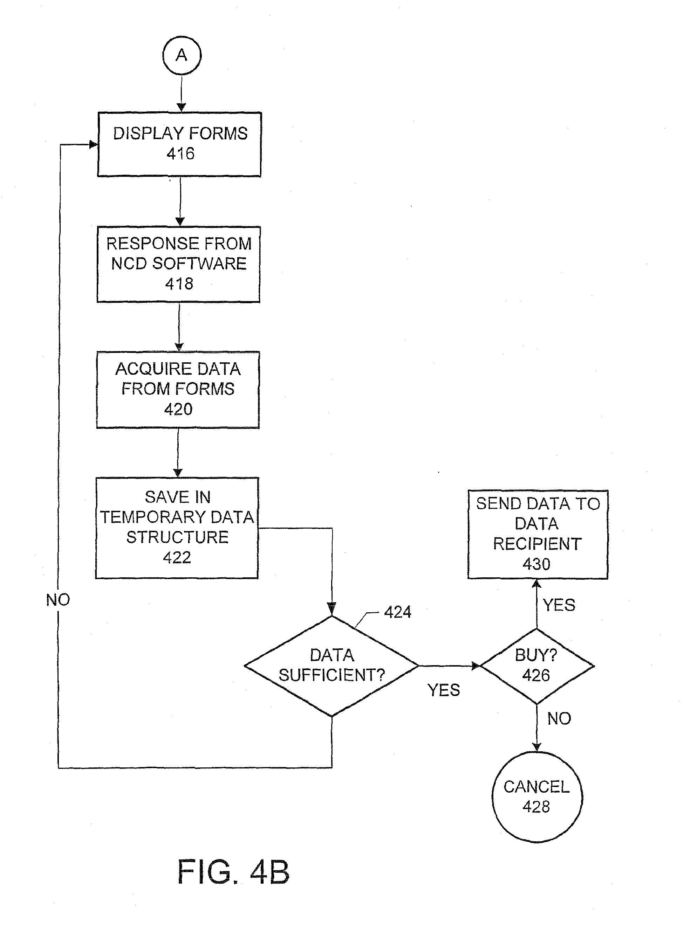

Referring to **Fig. 4B****,** the process flow continues. If the data repository software determines that the information provided by the data subject is insufficient to identify the data subject or that the data subject and data recipient are not associated with a common data controller, then the data repository software prompts the data subject for the purchasing information to complete the transaction by displaying forms to be completed **416.** The data repository **418** receives the response from the NCD software.

The data repository software extracts the data from the completed forms **420** and stores the data in a temporary data structure **422.** The information acquired from the forms is evaluated to determine if the information from the data subject is sufficient to complete the purchase transaction **424.** This step includes the data repository software accessing the authorized data recipient data structure using the authorized data recipient identifier to ensure that the data subject's purchasing information is in proper order, i.e., to check that the data subject's credit card accepted by the authorized data recipient. If the information is not sufficient, the data subject is prompted for the information again **416.** The operator of the data repository can set the number of iterations that the data subject is prompted for the information. If the data is sufficient, the data subject is asked to purchase the item **426.** If the data subject declines the transaction, the dialog ends **428.** If the data subject decides to buy the item, the data collected in the form is sent to the data recipient **430.** However, the transaction data is not permanently stored at the data repository.

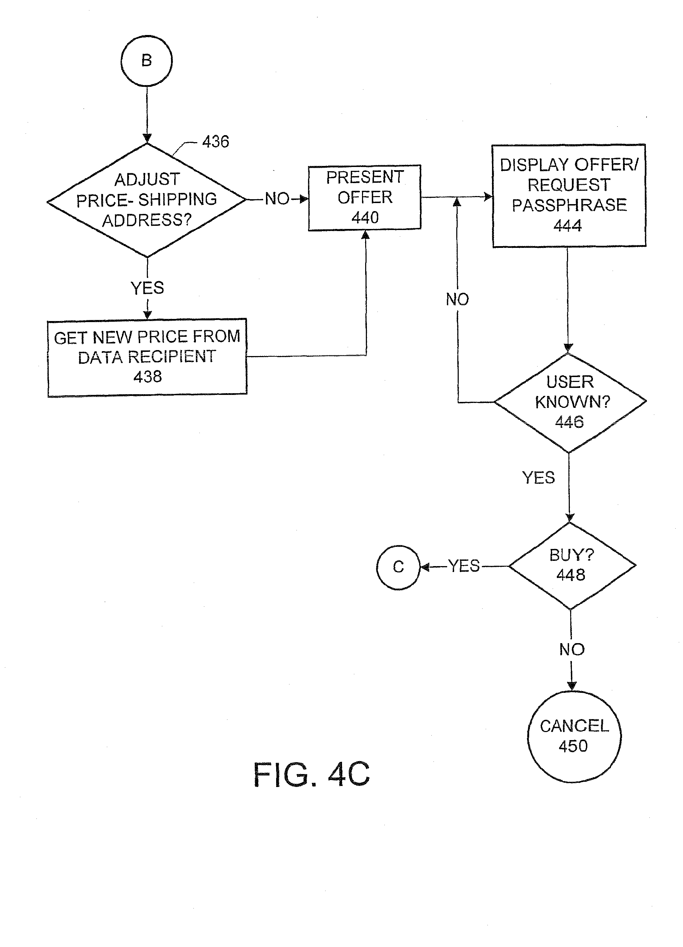

Referring to **Fig. 4C****,** the process flow continues further. Once the data repository software determines that the data subject's information is sufficient to complete the purchase transaction, the data repository software then determines if the price of the item needs to be adjusted for shipping costs **436.** If price adjustment is required, new price information is obtained from the authorized data recipient **430.** The revised offer is then presented to the data subject **440.** If no price adjustment is required **436,** the final offer is presented to the data subject **440.** The system next displays the offer and determines if the data subject needs to enter a passphrase. If the data subject is a registered data subject of the data controller who has not gone through the authentication process yet, then offer is then augmented with a prompt for the user to enter the data subject's passphrase **444.** The data repository software evaluates the entered passphrase against data held in the data subject data structure **446** to determine if the data subject is known (registered) by the data repository software. If the passphrase does not match, then the data subject is prompted for the correct passphrase **444.** The operator of the data repository can set the number of iterations that the data subject is prompted for a correct passphrase to avoid multiple fraudulent attempts to access information.

Once the data subject enters a correct passphrase or if there was no browser identifier for the data subject, the data subject is presented with a buy decision **448.** The data subject has several options available at this step: the data subject can elect to buy the item, change the data subject's information and buy the item, or cancel the transaction. If the data subject elects to change the data subject's information, the data subject must still decide to either buy the item or cancel the transaction after changing the information. If the data subject declines to purchase the item, then the transaction is canceled **450,** and the information held in the temporary data structure is deleted, the dialogue ends and the transaction is terminated **450.**

The data subject also has the option of changing the data subject's information. The data subject may wish to change such information for such reasons as the data subject does not agree with the selection by the data repository software or the information contains an error. For instance, if the data subject wishes to change the shipping address, the data subject can enter a new shipping address. In some instances, the data subject can have a plurality of possible entries into the same information block with a preferred entry. In such a situation, the data repository software chooses the preferred information to enter into the information block. The data repository software chooses the information via any selection process known in the art, such as most popular, last used, first used, etc. However, the data repository software cannot enter information into an information block if the authorized data recipient will not allow such an entry. For instance, a authorized data recipient may only accept the ACME credit card and the data subject has not previously used an ACME credit card to purchase an item using the present invention. In such a situation the data repository software prompts the data subject to provide an acceptable form of payment. Information options are available to the data subject in the form of directory of addresses, shippers, shipping methods, credit cards, and other information options.

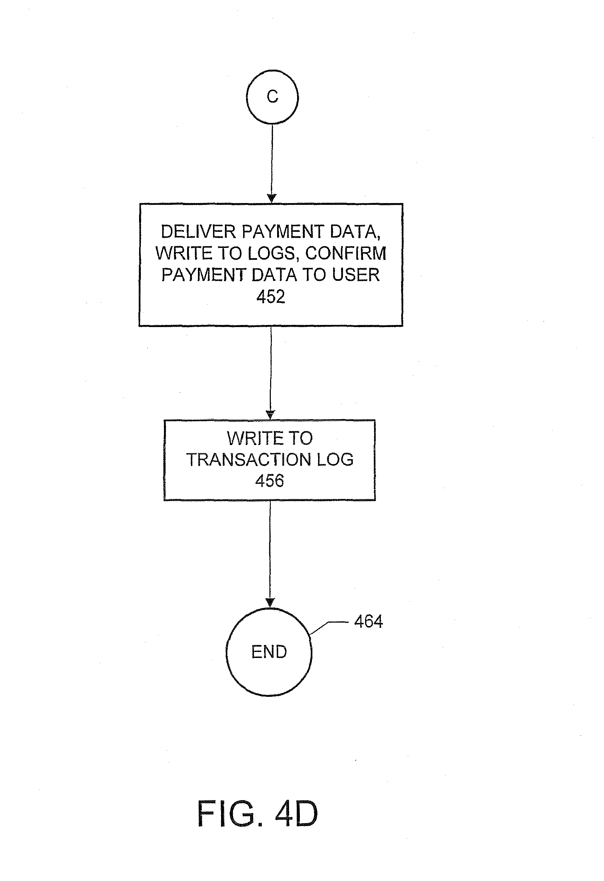

Referring to **Fig. 4D****,** if the data subject elects to purchase the item, then the information regarding the transaction is delivered to the authorized data recipient's computer, information is written to the authorized data recipient transaction log, and a message confirming the transaction is sent to the data subject's NCD **452.** The information regarding the transaction is written to the data subject transaction log **456.** The transaction process ends **464.**

If a data subject is registered with more than one data controller and attempts to make a purchase with a authorized data recipient common to both data controllers, the data subject registration used to make the purchase is determined by the authorized data recipient and can be determined, for example, according to the particular area of the authorized data recipient Web site accessed by the data subject or according to the previous or linking site used by the data subject.

Although the above description is directed at purchasing an item over the Internet, the same concept of distribution of information can be applied to other areas.

In all of these different types of embodiments, the communications between the different parties can be encrypted in any manner known in the art. In addition, some of the communications can be accomplished in different manners. For example, in an alternate embodiment of the preferred embodiment, communications between the data repository and the authorized data recipient computer can occur using a separate communication link. The communication link can be a direct link between the authorized data recipient and the data repository. Use of this separate link can ensure against unauthorized transactions.

The invention further relates to the following numbered items:
1. A system for the use of stored value data in electronic transactions comprising: at least one network;
   at least one data repository connected to the network for storing information about data subjects;
   at least one stored value data server connected to the network for providing stored value data to data subjects;
   at least one value exchange server for applying the stored value data to transactions made by data subjects;
   at least one data subject network communication device (NCD) connected to the network for allowing data subjects to conduct transactions over the network;
   at least one data recipient computer connected to the network for receiving data concerning the data subjects who are conducting transactions over the network; and
   whereby the data subjects can conduct transactions over the network from data recipients and whereby stored value data can be used on behalf of data recipients during the transactions.
2. The system for the use of stored value data in electronic transactions of item 1, wherein the at least one network is the Internet.
3. The system for the use of stored value data in electronic transactions of item 1, wherein the at least one network is an intranet.
4. The system for the use of stored value data in electronic transactions of item 1, wherein the at least one network is a wireless network.
5. The system for the use of stored value data in electronic transactions of item 1, wherein the at least one network comprises a wireless network in communication with a wired network.
6. The system for the use of stored value data in electronic transactions of item 1, wherein the at least one NCD is a computer connected to the network.
7. The system for the use of stored value data in electronic transactions of item 1, wherein the at least one NCD is a wireless device.
8. The system for the use of stored value data in electronic transactions of item 1, wherein the at least one NCD further comprises NCD software for downloading and browsing data files from the data recipient.
9. The system for the use of stored value data in electronic transactions of item 8, wherein the data files are web pages.
10. The system for the use of stored value data in electronic transactions of item 1, wherein the at least one data repository comprises:
   data repository software for administering the data repository, for storing information to complete transactions over the network and for communicating with the at least one value exchange serve and the at least one stored value data server;
   a temporary data structure for storing the data subjects' purchase information for a limited period of time;
   a data recipient data structure for storing information relating to the data recipients;
   a data subject transaction log for storing information concerning the transactions of the data subjects; and
   a data recipient transaction log for storing information concerning the transactions of data recipients.
11. The system for the use of stored value data in electronic transactions of item 1,
   wherein the stored value data server further comprises:
   stored value data software for gathering and storing information concerning the data recipients an the data subjects for communicating with the at least one value exchange server and the at least one data repository;
   a data recipient data structure for storing information regarding the stored value instruments that are accepted by the data recipients;
   a stored value data historical log for storing information regarding the value of the stored value instruments used by the data subjects;
   a value log for storing information regarding the value of the stored value data held by each data subject; and
   data subject data for storing information regarding stored value data held by the data subjects.
12. The system for the use of stored value data in electronic transactions of item 1,
   wherein the value exchange server further comprises:
   value exchange server software for managing accounts of issuers of stored value instruments and for communicating with the at least one stored value data server and the at least one data repository;
   an issuer data structure comprising information relating to the identity of the issuer and information relating to the stored value data issued by the issuer; and
   a redeemer data structure comprising information relating to the redeemer of the stored value data issued by an issuer.
13. The system for the use of stored value data in electronic transactions of item 12,
   wherein the redeemers are data recipients.
14. The system for the use of stored value data in electronic transactions of item 12,
   wherein the issuers holding accounts of stored value data comprise data subjects and manufacturers of goods being purchased.
15. The system for the use of stored value data in electronic transactions of item 12,
   wherein the issuer data structure comprises at least the initial value, current value, conditions of use, and stored value data identifier.
16. The system for the use of stored value data in electronic transactions of item 12,
   wherein the redeemer data structure comprises at least an identity of the redeemer and information relating to the stored value data redeemed.
17. The system for the use of stored value data in electronic transactions of item 12,
   wherein the data subject data structure comprises at least an identity of the data subject and contact information.
18. The system for the use of stored value data in electronic transactions of item 15,
   wherein the issuer comprises data subjects and manufacturers of goods being purchased.
19. The system for the use of stored value data in electronic transactions of item 1,
   wherein the stored value data has a cash value.
20. The system for the use of stored value data in electronic transactions of item 1,
   wherein the stored value data has no cash value.
21. The system for the use of stored value data in electronic transactions of item 12,
   wherein the issuer is a merchant.
22. The system for the use of stored value data in electronic transactions of item 12,
   wherein the data recipient is a merchant.
23. A method for using stored value data in electronic transactions over at least one network comprising:
   at least one issuer issuing stored value data having a value;
   storing the stored value data from the issuer on at least one data repository comprising a server;
   at least one data subject registering with the at least one data repository;
   the at least one data subject accumulating stored value data from the at least one issuer by conducting transactions over the at least one network; and
   the at least one data subject using at least some of the accumulated stored value data for the transaction being conducted.
24. The method for using stored value data in electronic transactions over at least one network of item 23, wherein the stored value data further comprises conditions of use.
25. The method for using stored value data in electronic transactions over at least one network of item 24, wherein the conditions are taken from the group consisting of expiration date, number of items purchased, value of prior purchases.
26. The method for using stored data in electronic transactions over at least one network of item 23, wherein the issuer issuing the stored value data comprises a data recipient sending a stored value instrument from an issuer site to the server for use by the data subject.
27. The method for using stored value data in electronic transactions over at least one network of item 23, wherein the stored value data has a cash value.
28. The method for using stored value data in electronic transactions over at least one network of item 23 wherein the stored value data has no cash value.
29. The method for using stored value data in electronic transactions over at least one network of item 23 wherein the issuer is a merchant.
30. The method for using stored value data in electronic transactions over at least one network of item 26 wherein the data recipient is a merchant.
31. The method for using stored value data in electronic transactions over at least one network of item 23 wherein the issuer is a manufacturer of a product being purchased by the data subject.
32. The method for using stored value data in electronic transactions over at least one network of item 23 further comprising the data repository server assigning a unique identifier to the data subject and providing the unique identifier to a data recipient.
33. The method for using stored value data in electronic transactions over at least one network of item 32 further comprising the data recipient analyzing buying habits of the data subject who is identified by the unique user identifier.
34. The method for using stored value data in electronic transactions over at least one network of item 23 further comprising a value exchange server managing accounts held by issuers of stored value instruments.
35. The method for using stored value data in electronic transactions over at least one network of item 34 further comprising storing the stored value data in an issuer data structure comprising at least the initial value, current value, conditions of use, and stored value data identifier.
36. The method for using stored value data in electronic transactions over at least one network of item 23 further comprising:
   stored value data software gathering and storing information concerning the data recipients an the data subjects and communicating with the at least one value exchange server and the at least one data repository;
   storing information in a data recipient data structure regarding the stored value instruments that are accepted by the data recipients;
   storing information in a stored value data historical log regarding the value of the stored value instruments used by the data subjects;
   storing information regarding the value of the stored value data held by each data subject in a value log for; and
   storing information regarding stored value data held by the data subjects in a data subject data.
37. The method for using stored value data in electronic transactions over at least one network of item 23 further comprising:
   a value exchange server software managing accounts of issuers of stored value instruments and communicating with the at least one stored value data repository server and the at least one data repository;
   storing issuer data in an issuer data structure comprising information relating to the identity of the issuer and information relating to the stored value data issued by the issuer; and
   storing redeemer data in a redeemer data structure comprising information relating to the redeemer of the stored value data issued by an issuer.
38. A system for data recipient invoked electronic transactions comprising:
   a network; and
   at least one data recipient computer associated with at least one data recipient authorized by at least one data controller, connected to the network, wherein the at least one data recipient computer further comprises web server software for hosting a web page, for executing client software from a data repository, and for allowing the at least one data recipient to send and receive information over the network; and
   at least one data subject network communication device (NCD) associated with at least one data subject and associated with the at least one data controller, connected to the network, and wherein the at least one data subject NCD further comprises NCD software for sending and receiving information over the network;
   the at least one data repository connected to the at least one data recipient computer via the network, wherein the at least one data repository further comprises data repository software, and wherein the data repository client software further comprises instructions for forwarding the authorized data recipient's offer to the at least one data repository via the NCD software, and wherein the data repository software further comprises instructions for gathering information to complete a transaction and for determining that the at least one authorized data recipient is authorized by the at least one data controller to receive information about the at least one data subject.
39. The system in accordance with item 38, wherein the transaction is a transaction to purchase an item.
40. The system in accordance with item 39, wherein the item purchased is goods or services.
41. The system in accordance with item 38, wherein the data repository further comprises instructions to send the purchasing information to the at least one authorized data recipient computer.
42. The system in accordance with item 38, wherein the network is selected from group consisting of the Internet, intranet, local area networks CLANS), and wide area networks (WANS), wireless, wireless local loops and cable networks.
43. A method for authorized data recipient invoked electronic transactions over a network between at least one data subject, associated with at least one data controller, having at least one data subject's NCD connected to the network, at least one authorized data recipient, associated with the at least one data controller, having at least one authorized data recipient computer connected to the network, and at least one data repository connected to the network, comprising:
   requesting an authorized data recipient's offer from at least one authorized data recipient over a network by at least one data subject using NCD software on the at least one data subject's NCD;
   invoking data repository client software on the at least one authorized data recipient computer in response to the data subject's request for a authorized data recipient's offer, and wherein invoking the data repository client software further comprises:
      connecting the at least one data subject's NCD to the at least one data repository;
      invoking the data repository client software;
      forwarding the authorized data recipient's offer to the least one data repository;
      determining that both the at least one data subject and one the at least one authorized data recipient are associated with the at least one data controller; and
      gathering the information by the data repository to complete a transaction.
44. The method in accordance with item 43 further comprising gathering information relating to the purchase of an item.
45. The method in accordance with item 44 further comprising sending the purchasing information to the at least one authorized data recipient computer.
46. The method in accordance with item 44, further comprising sending the purchasing information to the at least one authorized data recipient computer.
47. The method in accordance with item 43, further comprising the client software instructing the data subject NCD software to forward the authorized data recipient's offer to the data repository and sending a message indicating whether a NCD software identifier is present in the data subject's NCD software.
48. The method in accordance with item 47, wherein the sending of a message indicating whether a NCD software identifier is present in the data subject's NCD software further comprises the client software instructing the NCD software to forward a message and wherein the NCD software identifier is a cookie.

Although the present invention has been described in detail for purpose of illustration, it is understood that such detail is solely for that purpose, and variations can be made therein by those skilled in the art without departing from the scope of the invention. The preceding descriptions of the operations of the present invention are merely illustrative. In various embodiments of the disclosed inventions operational steps may be added, eliminated, performed in parallel or performed in a differing order. The apparatus, process and the computer-readable medium of the present invention are defined by the following claims.

## Claims

1. A computer-implemented method for purchasing an item or service over a network using a stored value instrument, comprising, at a server associated with a data repository:
receiving at said server a purchase offer generated by a data recipient, including a data subject identifier, a data recipient identifier and a price, from a data subject;
determining at said server at least one stored value instrument accepted by the data recipient;
in response to receiving the purchase offer from the data subject, sending a list of stored value instruments accepted by the data recipient to the data subject, such that the list of stored value instruments is not sent until the purchase offer is received from the data subject;
receiving at said server a selection of at least one stored value instrument, from the list of stored value instruments accepted by the data recipient, from the data subject; and
sending information regarding the purchase of the item or service to the data recipient.

2. The method of claim 1, wherein the data subject identifier is a digital signature.

3. The method of claim 1 or 2, wherein the purchase offer includes a flag to indicate whether a stored value instrument is accepted by the data recipient.

4. The method of claim 1, 2 or 3, wherein the purchase offer includes an identifier associated with a third-party stored value instrument.

5. The method of claim 4, wherein said determining includes querying a stored value instrument server to identify the third-party stored value instrument.

6. The method of claim 5, further comprising:
including the third-party stored value instrument in the list of accepted stored value instruments.

7. The method of claim 6, further comprising:
sending an update message associated with the third-party stored value instrument to a value exchange server.

8. The method of any one of claims 1 to 7, further comprising:
storing transaction information associated with the purchase offer in a data subject transaction log and a data recipient transaction log; and
updating a balance amount associated with the selected stored value instrument in a stored value instrument log.

9. The method of any one of claims 1 to 8, further comprising:
requesting a final price from the data recipient based on the price and data subject shipping information; and
receiving the final price from the data recipient.

10. The method of any one of claims 1 to 9, further comprising:
sending a confirmation message to the data recipient.

11. The method of any one of claims 1 to 10, wherein, prior to receiving the purchase offer, the purchase offer is sent to the data subject by the data recipient in response to a purchase offer request sent from the data subject to the data recipient.

12. An apparatus for purchasing an item using a stored value instrument over a network, comprising:
a processor coupled to the network; and
a memory, coupled to the processor, storing instructions to be executed by the processor to:
receive a purchase offer generated by a data recipient, including a data subject identifier, a data recipient identifier and a price, from a data subject,
determine at least one stored value instrument accepted by the data recipient,
in response to receiving the purchase offer from the data subject, send a list of stored value instruments accepted by the data recipient to the data subject, such that the list of stored value instruments is not sent until the purchase offer is received from the data subject,
receive a selection of at least one stored value instrument, from the list of stored value instruments accepted by the data recipient, from the data subject, and
send information regarding the purchase of the item or service to the data recipient.

13. A computer-readable medium including instructions adapted to be executed by at least one processor to implement the computer-implemented method according to any one of claims 1 to 11.
